(19)

Europäisches
Patentamt

European
Patent Office

Office européen
des brevets

(11) **EP 4 329 019 A1**

(12) **EUROPEAN PATENT APPLICATION**
published in accordance with Art. 153(4) EPC

(43) Date of publication:
**28.02.2024 Bulletin 2024/09**

(21) Application number: **22791403.3**

(22) Date of filing: **11.03.2022**

(51) International Patent Classification (IPC):
**H01M 4/68** (2006.01)  **C22C 11/06** (2006.01)
**H01M 10/18** (2006.01)

(52) Cooperative Patent Classification (CPC):
**C22C 11/06; H01M 4/68; H01M 10/18;** Y02E 60/10;
Y02P 70/50

(86) International application number:
**PCT/JP2022/011073**

(87) International publication number:
**WO 2022/224623 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.04.2021  JP 2021071371**

(71) Applicants:
• **FURUKAWA ELECTRIC CO., LTD.
Tokyo 100-8322 (JP)**
• **The Furukawa Battery Co., Ltd.
Yokohama-shi, Kanagawa-ken 240-0006 (JP)**

(72) Inventors:
• **KANEKO, Hiroshi
Tokyo 100-8322 (JP)**

• **YAMAUCHI, Miho
Tokyo 100-8322 (JP)**
• **FURUKAWA, Jun
Jyoban-shimofunao-machi, Iwaki-shi,
Fukushima 972-
8501 (JP)**
• **KOIDE, Ayano
Jyoban-shimofunao-machi, Iwaki-shi,
Fukushima 972-
8501 (JP)**
• **YAMADA, Keizo
Jyoban-shimofunao-machi, Iwaki-shi,
Fukushima 972-
8501 (JP)**

(74) Representative: **Grünecker Patent- und
Rechtsanwälte
PartG mbB
Leopoldstraße 4
80802 München (DE)**

(54) **LEAD FOIL AND BIPOLAR LEAD-ACID BATTERY**

(57)    Provided are lead foil and a bipolar lead acid storage battery capable of suppressing a voltage drop in the battery due to peeling of the lead foil from a substrate. Provided is lead foil for a current collector in a bipolar lead acid storage battery, in which a back face of the lead foil opposed to a substrate of the bipolar lead acid storage battery has a contact length of 150 um or more and 1800 um or less in a profile curve acquired, orthogonally to a rolling direction, by surface roughness measurement with a stylus, and with a scanning distance of 4 mm and a measurement interval of 0.5 um, the contact length is a sum total of respective absolute values of differences in height between adjacent measurement points.

FIG. 3

EP 4 329 019 A1

**Description**

Technical Field

The present invention relates to lead foil and a bipolar lead acid storage battery.

Background Art

A bipolar lead acid storage battery includes a bipolar electrode including a positive electrode, a negative electrode, and a substrate (bipolar plate), on one surface of which the positive electrode is provided and on the other surface of which the negative electrode is provided. In a conventional bipolar electrode, lead foil is provided on both surfaces of a resin substrate, and a positive electrode and a negative electrode are provided on one surface and the other surface of the substrate, respectively. For example, PTL 1 discloses a lead alloy substrate having a surface roughness of 15 um or more for the electrodes of a lead acid storage battery.

Citation List

Patent Literature

PTL 1: JP 2004-158433 A

Summary of Invention

Technical Problem

Meanwhile, in bipolar lead acid storage batteries, lead foil and a resin substrate are bonded by an adhesive. If sulfuric acid infiltrates the bonding interface, the adhesive is chemically degraded. Furthermore, the lead foil undergoes growth deformation that expands with long-term use of the battery. Therefore, the synergistic effect of the chemical degradation of the adhesive and the gross of the lead foil decreases the adhesive strength between the lead foil and the substrate. When the adhesive strength decreases, the lead foil peels away from the substrate, which causes a liquid junction path, resulting in a drop in battery voltage.

Therefore, the present invention has been made in view of the above problems, and an object of the present invention is to provide lead foil and a bipolar lead acid storage battery capable of suppressing a voltage drop in the battery due to peeling of the lead foil from a substrate.

Solution to Problem

According to one aspect of the present invention, there is provided lead foil for a current collector in a bipolar lead acid storage battery, in which a back face of the lead foil opposed to a substrate of the bipolar lead acid storage battery has a contact length of 150 um or more and 1800 um or less in a profile curve acquired, orthogonally to a rolling direction, by surface roughness measurement with a stylus, and with a scanning distance of 4 mm and a measurement interval of 0.5 um, the contact length is a sum total of respective absolute values of differences in height between adjacent measurement points.

According to one aspect of the present invention, there is provided a bipolar lead acid storage battery in which at least one of positive lead foil and negative lead foil is the above lead foil.

Advantageous Effects of Invention

According to one aspect of the present invention, there are provided lead foil and a bipolar lead acid storage battery capable of suppressing a voltage drop in the battery due to peeling of the lead foil from a substrate.

Brief Description of Drawings

FIG. 1 is a cross-sectional view for explaining a structure of a bipolar lead acid storage battery according to an embodiment of the present invention;
FIG. 2 is an enlarged cross-sectional view of a bipolar electrode for explaining a structure of a main part of the bipolar lead acid storage battery of FIG. 1;

FIG. 3 is a graph depicting an example of a profile curve acquired by surface roughness measurement with a stylus;

FIG. 4 is an explanatory view illustrating a mechanism of infiltration of sulfuric acid;

FIG. 5A is a schematic view illustrating a conventional pitch of irregularities, and FIG. 5B is a schematic view illustrating a pitch of irregularities in an embodiment of the present invention; and

FIG. 6 is a plan view illustrating an outer circumferential edge portion of lead foil.

Description of Embodiments

In the following detailed description, embodiments of the present invention will be described with reference to the drawings. In the description of the drawings, the same or similar portions are denoted by the same or similar reference signs, and redundant description is omitted. Each drawing is schematic and includes a case different from an actual case. In addition, the embodiments described below illustrate apparatuses and methods for embodying the technical idea of the present invention, and the technical idea of the present invention does not specify the materials, structures, arrangements, and the like of the components as follows. Various modifications can be made to the technical idea of the present invention within the technical scope defined by the claims described in the claims.

<Bipolar lead acid storage battery>

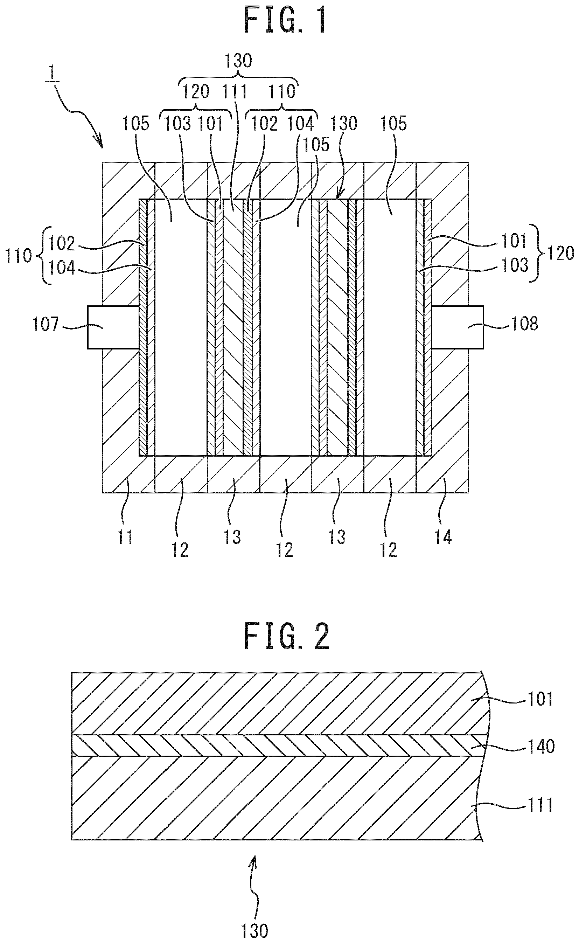

A structure of a bipolar lead acid storage battery 1 according to an embodiment of the present invention will be described with reference to FIGS. 1 and 2. The bipolar lead acid storage battery 1 illustrated in FIG. 1 includes a first plate unit in which a negative electrode 110 is fixed to a first plate 11 having a flat plate shape, a second plate unit in which an electrolytic layer 105 is fixed to the inside of a second plate 12 having a frame plate shape, a third plate unit in which a bipolar electrode 130, in which a positive electrode 120 is formed on one surface of a substrate 111 and a negative electrode 110 is formed on the other surface, is fixed to the inside of a third plate 13 having a frame plate shape, and a fourth plate unit in which the positive electrode 120 is fixed to a fourth plate 14 having a flat plate shape. The substrate 111 is formed of a thermoplastic resin.

Then, the second plate units and the third plate units are alternately stacked between the first plate unit and the fourth plate unit to form the bipolar lead acid storage battery 1 having a substantially rectangular parallelepiped shape. The number of the stacked second plate units and the number of the stacked third plate units are set such that the storage capacity of the bipolar lead acid storage battery 1 has a desired value.

A negative terminal 107 is fixed to the first plate 11, and the negative electrode 110 and the negative terminal 107 that are fixed to the first plate 11 are electrically connected.

A positive terminal 108 is fixed to the fourth plate 14, and the positive electrode 120 and the positive terminal 108 that are fixed to the fourth plate 14 are electrically connected.

The electrolytic layer 105 is formed of, for example, a glass fiber mat impregnated with an electrolyte containing sulfuric acid.

The first to fourth plates 11 to 14 are formed of, for example, a known molding resin. The first to fourth plates 11 to 14 are fixed to each other by an appropriate method such that the inside is sealed to prevent the electrolyte from flowing out.

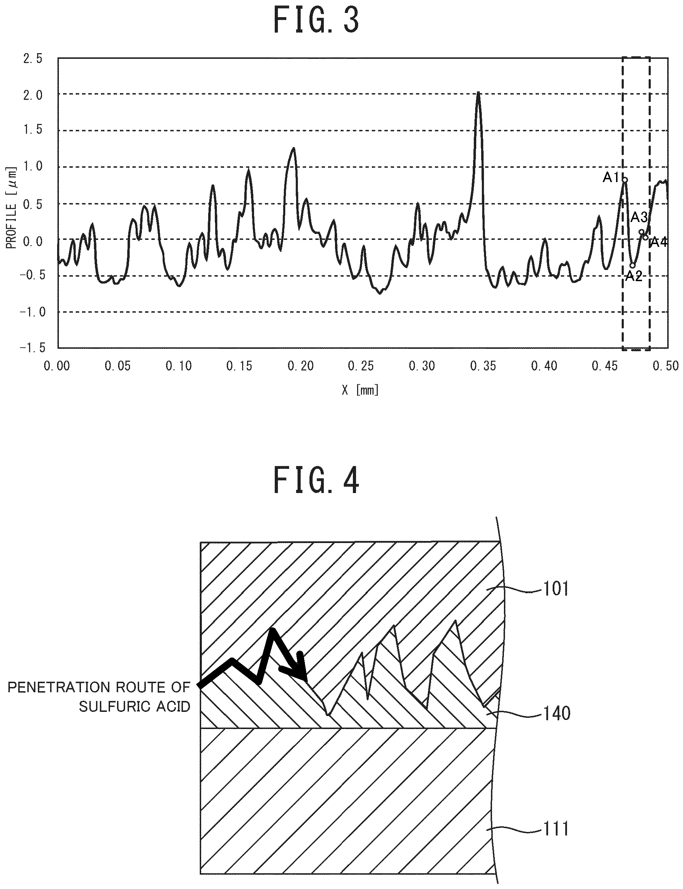

The positive electrode 120 includes positive lead foil 101 made of lead or a lead alloy and disposed on the one surface of the substrate 111, a positive active material layer 103 disposed on the positive lead foil 101, and an adhesive layer 140 disposed between the one surface of the substrate 111 and the positive lead foil 101 to bond the one surface of the substrate 111 to the positive lead foil 101. That is, on the one surface of the substrate 111 (upward-facing surface of the paper in FIGS. 2 and 3), the adhesive layer 140, the positive lead foil 101, and the positive active material layer 103 are stacked in this order.

The negative electrode 110 includes negative lead foil 102 made of lead or a lead alloy and disposed on the other surface of the substrate 111, a negative active material layer 104 disposed on the negative lead foil 102, and an adhesive layer (not illustrated) disposed between the other surface of the substrate 111 and the negative lead foil 102 to bond the other surface of the substrate 111 to the negative lead foil 102.

These positive electrode 120 and negative electrode 110 are electrically connected by an appropriate method.

Note that, in the cross-sectional view of the bipolar electrode illustrated in FIG. 2, illustration of the negative electrode 110 and the positive active material layer 103 is omitted.

In the bipolar lead acid storage battery 1 having such a configuration, the substrate 111, the positive lead foil 101, the positive active material layer 103, the negative lead foil 102, and the negative active material layer 104 constitute the bipolar electrode 130, as previously described. The bipolar electrode is an electrode, a single one of which functions as both a positive electrode and a negative electrode.

The bipolar lead acid storage battery 1 has a battery configuration in which a plurality of cell members are connected in series by alternately stacking and assembling the cell members in which the electrolytic layer 105 is interposed between the positive electrode 120 and the negative electrode 110.

Furthermore, in the bipolar lead acid storage battery 1 according to the present embodiment, the adhesive layer 140 disposed between the one surface of the substrate 111 and the positive lead foil 101 is formed of a cured product of a reaction-curable adhesive that is cured by reaction of a main agent containing an epoxy resin with a curing agent containing an amine compound.

<Lead foil>

The lead foil according to the present embodiment is the positive lead foil 101 and the negative lead foil 102 in the above bipolar lead acid storage battery 1, that is, lead foil for a current collector in the bipolar lead acid storage battery 1. In the present embodiment, one surface of the lead foil that faces and is in contact with the positive active material layer 103 or the negative active material layer 104 is defined as a front surface, and the other surface of the lead foil that faces and is in contact with the substrate 111 is defined as a back surface. In addition, the lead foil is produced to have a predetermined thickness by being rolled with a rolling roll.

The back surface of the lead foil has a contact length X of 150 um or more and 1800 um or less in a profile curve acquired, orthogonally to a rolling direction at the time of rolling, by surface roughness measurement with a stylus. The surface roughness measurement with a stylus can be performed by the measurement method specified in JIS B 0601:1994. When the lead foil is measured by this measurement method, a profile curve as illustrated in FIG. 3 is acquired. In the present embodiment, the contact length X, with a scanning distance of 4 mm and a measurement interval of 0.5 um, is a sum total of respective absolute values of differences in height between adjacent measurement points. The sum total of respective absolute values of differences in height between adjacent measurement points is specified as follows: for example, assuming that, in FIG. 3, plots indicated by $A_1$ to $A_4$ are measurement points at continuous four points ($A_1$ to $A_4$ are profile (height) values on the vertical axis), the sum total of respective absolute values of differences in height between adjacent measurement points at these four points is $|A_2 - A_1| + |A_3 - A_2| + |A_4 - A_3|$. That is, in the present embodiment, the surface roughness is measured at 8000 measurement points by performing the measurement at intervals of 0.5 um in the range of 4 mm. For these measurement points, assuming that heights (profiles on the vertical axis in FIG. 3), that are measurement results at the measurement points from the start point to the end point in a scanning direction, are $A_1$ to $A_{8000}$, the contact length X is expressed by the following Equation (1).

[Equation 1]

$$\sum_{n=1}^{7999} |A_{n+1} - A_n| \quad \cdots \quad (1)$$

As described above, the peeling of the lead foil from the substrate is greatly affected by infiltration of sulfuric acid from the end surface of the electrode into the bonding interface between the lead foil and the substrate. Furthermore, the inventors conducted EPMA analysis on an electrode in which the peeling occurred due to the use of a battery, and confirmed from the detected components of sulfuric acid that sulfuric acid infiltrated between the lead foil and the adhesive layer. That is, a penetration route of sulfuric acid is an interface between the lead foil (positive lead foil 101 in FIG. 4) and the adhesive layer 140, as illustrated in FIG. 4. Then, the present inventors have considered that the penetration of sulfuric acid can be delayed by increasing the penetration route, and have made the present invention. That is, the present inventors have found that when the contact length X, on the back surface of the lead foil, is set to 150 um or more and 1800 um or less, a micro-interface is widened and a creepage distance is increased. A state in which the contact length is more than 1800 um is not preferable because the pitch of irregularities is too narrow and the entry of the adhesive is inhibited. The contact length X is preferably 200 um or more and 1000 um or less, and more preferably 250 um or more and 500 um or less. By setting the contact length X within such a range, the penetration of sulfuric acid can be delayed, so that peeling of the lead foil from the substrate can be suppressed. Therefore, a voltage drop in the bipolar lead acid storage battery 1 can be suppressed.

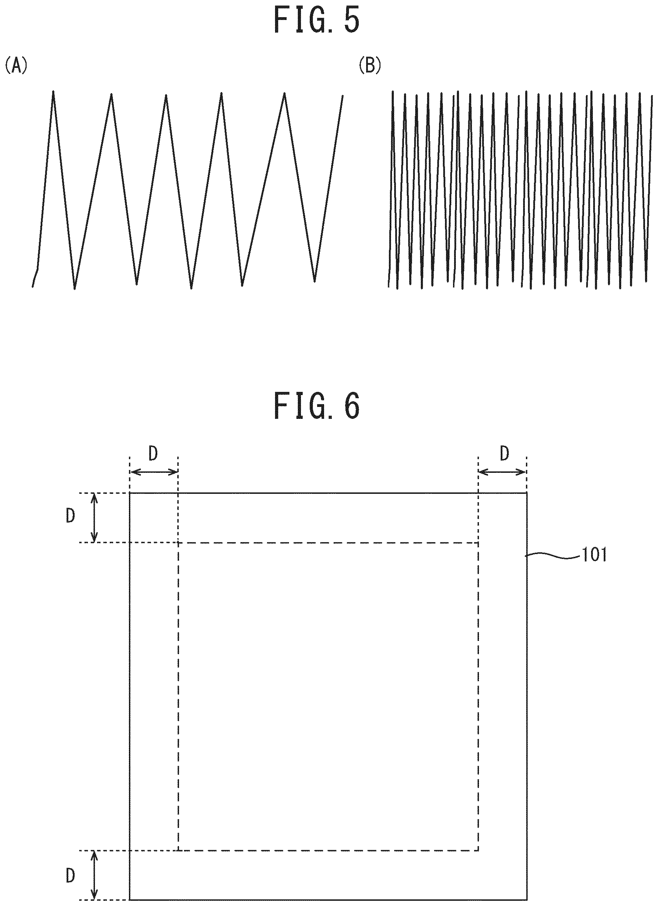

The contact length X may be increased by changing the height of the roughness of the back surface of the lead foil, or may be increased by narrowing the pitch of irregularities without changing the height of the roughness. As illustrated in FIG. 5, by narrowing only the pitch of irregularities without changing the height of the irregularities, as illustrated in FIG. 5B, as compared with the conventional pitch of irregularities illustrated in FIG. 5A, the contact length can also be increased.

In addition, since sulfuric acid infiltrates from the end surface side of the electrode (the positive electrode 120 or the negative electrode 110), the contact length X may be set within the above range only at the outer circumferential edge portion of the lead foil. The outer circumferential edge portion of the lead foil is, for example, a region outside the region surrounded by a dotted line in the positive lead foil 101 illustrated in FIG. 6. A width W of the outer circumferential edge portion (an inward length from the tip of the circumferential end portion of the lead foil) is preferably 5 mm or more. If the width W is less than 5 mm, the effect of delaying the penetration of sulfuric acid becomes insufficient.

The lead foil is made of lead or a lead alloy containing lead as a main component. It is preferable that the lead foil contains Sn and the content of Sn is 0.4% by mass or more and 2% by mass or less. When Sn is contained in the lead foil, the adhesion between the lead foil and the active material can be improved. If the content of Sn is less than 0.4% by mass, the adhesion between the lead foil and the active material is decreased, so that peeling of the active material layer or the like may occur. On the other hand, if the content of Sn is more than 2% by mass, intergranular corrosion susceptibility is increased, so that the lead foil may be easily degraded.

The lead foil preferably contains at least one type selected from the group consisting of Ca, Ag, and Cu. When any components of Ca, Ag, and Cu are contained in the lead foil, the metal structure of the lead alloy can be made uniform, and the surface state specified in the present embodiment can be easily formed. Furthermore, the content of Ca is preferably more than 0% by mass and 0.1% by mass or less, the content of Ag is preferably more than 0% by mass and 0.05% by mass or less, and the content of Cu is preferably more than 0% by mass and 0.05% by mass or less. If the content of any component exceeds the above upper limit value, the corrosion resistance of the lead foil is decreased. On the other hand, if the contents of Ca, Ag, and Cu are lower than the above lower limit values, lead is easily deformed, and it is difficult to thinly roll the lead foil.

Furthermore, it is preferable that the lead foil contains Bi and the content of Bi is more than 0% by mass and 0.004% by mass or less. When Bi is contained in the lead foil, the metal structure of the lead alloy can be made uniform, and the surface state specified in the present embodiment can be easily formed. However, if the content of Bi is more than 0.004% by mass, the moldability of the lead foil may be deteriorated. In particular, when the final plate thickness of the lead foil is thin, there is a high possibility that poor processability due to the addition of Bi may become apparent.

The content of each composition of the lead foil is determined by an emission spectroscopic analysis method.

In being subjected to rolling processing, the lead foil according to the present embodiment can be produced by using a rolling roll whose circumferential side surface is roughened in advance. In this case, by polishing the circumferential side surface of the rolling roll with a steel brush, a grindstone having a coarse grain size, or the like, the circumferential side surface can be provided with irregularities satisfying the above contact length X, and the circumferential side surface can be roughened. The polishing may be performed multiple times by changing a polishing pressure. In this case, by gradually reducing the polishing pressure, a groove formed by the polishing can be further provided with a groove in the subsequent polishing, so that the contact length X can be increased. Furthermore, when the circumferential side surface of the rolling roll is sufficiently rough, rolling may be performed without the processing for providing irregularities on the circumferential side surface. When irregularities are provided to the rolling roll, it is preferable to use, for the rolling roll, a hard material such as a chromeplated product so that the roll lines of the rolling roll are not crushed. The lead foil rolled by the rolling roll may further be provided with irregularities by using a steel brush or the like. In this case, irregularities satisfying the above contact length X may be provided by brushing with a steel brush in directions of 0°, 45°, and 90° with respect to the rolling direction.

<Modifications>

Although the present invention has been described above with reference to specific embodiments, these descriptions are not intended to limit the invention. Another embodiment of the present invention, including various modifications along with the disclosed embodiments, will also be apparent to those skilled in the art with reference to the descriptions of the present invention. Therefore, it should be understood that the embodiments of the invention described in the claims also cover embodiments including, alone or in combination, these modifications described in the present description.

For example, in the above embodiments, the contact length X is specified for the back surface of the lead foil, but the present invention is not limited to such an example. For example, not only the back surface, but also the front surface of the lead foil may have the same configuration as the back surface.

Examples

Examples performed by the present inventors will be described. In Examples, a rolling roll plated with chromium was polished with a grindstone having a coarse grain size. In the polishing, the grindstone had a grain size of up to #80. In finishing with a grain size of #80, polishing was performed at a polishing pressure of 0.04 to 0.05 MPa, and then polishing was further performed at a weak polishing pressure of 0.02 to 0.03 MPa. Then, a lead foil was produced by subjecting to rolling processing using the rolling roll. For the produced lead foil, the contact length X was measured by surface roughness measurement with a stylus, and the thickness of the lead foil was measured.

In addition, the lead foils, as a comparison, were similarly rolled under the condition of using a rolling roll whose circumferential side surface has the contact length X of less than 150 um and under the condition of increasing the content of Bi, and the contact lengths X and the thicknesses of the produced lead foils were measured.

In Examples 1 to 9 and 13 to 15 and Comparative Examples 1 to 2, an ingot having a thickness of 8 mm was rolled until the thickness became 0.25 mm. In Examples 10 to 12, an ingot having a thickness of 8 mm was rolled until the thickness became 0.10 mm. The reduction was set to 0.4 mm/pass or more.

In Examples, the produced lead foils were further subjected to a constant potential test in order to evaluate a penetration distance of sulfuric acid. In the test, the produced lead foil was bonded to an ABS resin plate using an epoxy adhesive, which was subjected to the constant potential test. For the epoxy adhesive, a bisphenol A type epoxy resin and a curing agent of an acid anhydride were used. In the constant potential test, $Hg/Hg_2SO_4$ was used as a reference electrode, and the potential was held at 1350 mV. The constant potential test was performed in an environment of 60°C for 4 weeks. The distance, at which sulfuric acid infiltrated the interface between the ABS resin and the lead foil, was measured by EPMA analysis of the cross section.

As a result of Examples, the test results of the alloy components of the lead foils, the contact lengths X, the thicknesses of the foils, and the sulfuric acid penetration distances are shown in Table 1. In Table 1, the case where the sulfuric acid penetration distance, as the test result of the sulfuric acid penetration distance, is 5 mm or less is indicated as "⊙ (Excellent)", the case where the sulfuric acid penetration distance is 10 mm or less is indicated as "o (Good)", and the case where the sulfuric acid penetration distance is more than 10 mm is indicated as "× (Poor)".

[Table 1]

| | | Alloy composition (% by mass) | | | | | | Contact length X [μm] | Thickness of foil [mm] | Sulfuric acid penetration distance |
|---|---|---|---|---|---|---|---|---|---|---|
| | | Sn | Ca | Ag | Cu | Bi | Pb | | | |
| Example 1 | 1 | 1.8 | 0.09 | 0 | 0 | 0.002 | Balance | 1720 | 0.25 | ○ |
| Example 2 | 2 | 1.8 | 0.09 | 0 | 0 | 0.002 | Balance | 850 | 0.25 | ⊙ |
| Example 3 | 3 | 1.8 | 0.09 | 0 | 0 | 0.002 | Balance | 435 | 0.25 | ⊙ |
| Example 4 | 4 | 1.8 | 0.09 | 0 | 0 | 0.002 | Balance | 230 | 0.25 | ⊙ |
| Example 5 | 5 | 1.8 | 0.09 | 0 | 0 | 0.002 | Balance | 162 | 0.25 | ⊙ |
| Example 6 | 6 | 2.1 | 0.09 | 0 | 0 | 0.002 | Balance | 343 | 0.25 | ⊙ |
| Example 7 | 7 | 0.3 | 0.09 | 0 | 0 | 0.002 | Balance | 450 | 0.25 | ⊙ |
| Example 8 | 8 | 1.8 | 0 | 0 | 0 | 0.002 | Balance | 380 | 0.25 | ○ |
| Example 9 | 9 | 1.8 | 0 | 0.03 | 0 | 0.002 | Balance | 299 | 0.25 | ⊙ |
| Example 10 | 10 | 1.8 | 0 | 0 | 0.08 | 0.002 | Balance | 320 | 0.25 | ⊙ |
| Example 11 | 11 | 1.8 | 0.04 | 0.01 | 0 | 0.002 | Balance | 424 | 0.25 | ⊙ |
| Example 12 | 12 | 1.8 | 0.09 | 0 | 0 | 0.002 | Balance | 1130 | 0.10 | ○ |
| Example 13 | 13 | 1.8 | 0.09 | 0 | 0 | 0.002 | Balance | 792 | 0.10 | ○ |
| Example 14 | 14 | 1.8 | 0.09 | 0 | 0 | 0.002 | Balance | 361 | 0.10 | ⊙ |
| Example 15 | 15 | 1.8 | 0.09 | 0 | 0 | 0.002 | Balance | 222 | 0.10 | ○ |
| Example 16 | 16 | 1.8 | 0.09 | 0 | 0 | 0.002 | Balance | 182 | 0.10 | ○ |
| Example 17 | 17 | 1.8 | 0.2 | 0 | 0 | 0.002 | Balance | 439 | 0.25 | ⊙ |
| Example 18 | 18 | 1.8 | 0 | 0.07 | 0 | 0.002 | Balance | 359 | 0.25 | ⊙ |
| Example 19 | 19 | 1.8 | 0 | 0 | 0.08 | 0.002 | Balance | 367 | 0.25 | ⊙ |
| Comparative Example 1 | 20 | 1.7 | 0.09 | 0 | 0 | 0.002 | Balance | 15 | 0.25 | × |
| Comparative Example 2 | 21 | 1.7 | 0.09 | 0 | 0 | 0.002 | Balance | 1.5 | 0.25 | × |
| Comparative Example 3 | 22 | 1.7 | 0.09 | 0 | 0 | 0.01 | Balance | - | - | - |

In Examples 1 to 19, the contact lengths X were 150 um or more and 1800 um or less, and the penetration distances of sulfuric acid were 5 mm or less, as shown in Table 1, and satisfactory results were obtained. On the other hand, in Comparative Examples 1 and 2, the contact lengths X were as short as less than 150 um, and the penetration distances of sulfuric acid were also more than 10 mm. This is because the contact lengths X, that is, the lengths of the penetration routes of sulfuric acid were short. In addition, in Comparative Example 3, the amount of Bi was large, so that the moldability was poor and edge cracking occurred at an intermediate plate thickness to the final finished thickness, and therefore the rolling was interrupted. In Comparative Example 3, satisfactory results were obtained without cracking up to the intermediate plate thickness to the final finished thickness. From the above results, it has been confirmed that penetration of sulfuric acid can be delayed by increasing the contact length X as in the above embodiments, and therefore peeling of the lead foil from the substrate can be suppressed.

Reference Signs List

| 1 | Bipolar lead acid storage battery |
| 101 | Positive lead foil |
| 102 | Negative lead foil |
| 103 | Positive active material layer |
| 104 | Negative active material layer |
| 105 | Electrolytic layer |
| 110 | Negative electrode |
| 111 | Substrate |
| 120 | Positive electrode |
| 130 | Bipolar electrode |
| 140 | Adhesive layer |

**Claims**

1. Lead foil for a current collector in a bipolar lead acid storage battery, wherein

    a back face of the lead foil opposed to a substrate of the bipolar lead acid storage battery has a contact length of 150 um or more and 1800 um or less in a profile curve acquired, orthogonally to a rolling direction, by surface roughness measurement with a stylus, and
    with a scanning distance of 4 mm and a measurement interval of 0.5 um, the contact length is a sum total of respective absolute values of differences in height between adjacent measurement points.

2. The lead foil according to claim 1, wherein the contact length at at least an outer circumferential edge portion of the back face is 150 um or more and 1800 um or less, and
    the outer circumferential edge portion has a width of 5 mm or more, and the width is an inward length from a tip of a circumferential end portion of the lead foil.

3. The lead foil according to claim 1 or 2, wherein a content of Sn is 0.4% by mass or more and 2% by mass or less.

4. The lead foil according to any one of claims 1 to 3, wherein

    the lead foil contains at least one type selected from the group consisting of Ca, Ag, and Cu,
    a content of Ca is more than 0% by mass and 0.1% by mass or less,
    a content of Ag is more than 0% by mass and 0.05% by mass or less, and
    a content of Cu is more than 0% by mass and 0.05% by mass or less.

5. The lead foil according to any one of claims 1 to 4, wherein a content of Bi is more than 0% by mass and 0.004% by mass or less.

6. A bipolar lead acid storage battery, wherein at least one of positive lead foil and negative lead foil is the lead foil according to any one of claims 1 to 5.

# FIG. 1

# FIG. 2

# FIG. 3

# FIG. 4

# FIG. 5

(A)

(B)

# FIG. 6

101

## INTERNATIONAL SEARCH REPORT

International application No.

**PCT/JP2022/011073**

### A. CLASSIFICATION OF SUBJECT MATTER

*H01M 4/68*(2006.01)i; *C22C 11/06*(2006.01)i; *H01M 10/18*(2006.01)i
FI: H01M4/68 A; H01M10/18; C22C11/06

According to International Patent Classification (IPC) or to both national classification and IPC

### B. FIELDS SEARCHED

Minimum documentation searched (classification system followed by classification symbols)

H01M4/68; C22C11/06; H01M10/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2004-158433 A (FURUKAWA BATTERY CO., LTD.) 03 June 2004 (2004-06-03) | 1-6 |
| A | JP 47-26633 A (JAPAN STORAGE BATTERY CO., LTD.) 25 October 1972 (1972-10-25) | 1-6 |
| A | JP 2020-510968 A (EAST PENN MANUFACTURING CO., INC.) 09 April 2020 (2020-04-09) | 1-6 |
| A | JP 2014-529175 A (EAST PENN MANUFACTURING CO., INC.) 30 October 2014 (2014-10-30) | 1-6 |
| E, A | JP 2022-60710 A (FURUKAWA ELECTRIC CO., LTD.; THE FURUKAWA BATTERY CO., LTD.) 15 April 2022 (2022-04-15) | 1-6 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/011073**

| Patent document cited in search report | | | Publication date (day/month/year) | Patent family member(s) | | | Publication date (day/month/year) |
|---|---|---|---|---|---|---|---|
| JP | 2004-158433 | A | 03 June 2004 | US | 2004/0142243 | A1 | |
| | | | | WO | 2003/088385 | A1 | |
| | | | | EP | 1496556 | A1 | |
| | | | | CN | 1533617 | A | |
| | | | | KR | 10-0566624 | B1 | |
| JP | 47-26633 | A | 25 October 1972 | (Family: none) | | | |
| JP | 2020-510968 | A | 09 April 2020 | JP | 2014-530450 | A | |
| | | | | US | 2017/0179536 | A1 | |
| | | | | US | 2013/0065105 | A1 | |
| | | | | WO | 2018/161075 | A1 | |
| | | | | WO | 2013/036575 | A1 | |
| | | | | CA | 3054581 | A1 | |
| | | | | CN | 110546800 | A | |
| | | | | CA | 2847838 | A1 | |
| | | | | CN | 103875098 | A | |
| JP | 2014-529175 | A | 30 October 2014 | US | 2013/0065110 | A1 | |
| | | | | WO | 2013/036577 | A1 | |
| | | | | CA | 2847843 | A1 | |
| | | | | CN | 103858252 | A | |
| JP | 2022-60710 | A | 15 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004158433 A